# EUROPÄISCHE PATENTSCHRIFT

(11) **EP 3 895 387 B1**
(45) Veröffentlichungstag und Bekanntmachung des Hinweises auf die Patenterteilung: **02.08.2023**
(21) Anmeldenummer: 19827589.3
(22) Anmeldetag: 12.12.2019
(51) Int. Cl.: H04L 12/66, H04L 9/40, H04L 12/40, H04L 12/46

(54) **KOMMUNIKATIONSMODUL**
COMMUNICATION MODULE
MODULE DE COMMUNICATION

(30) Priorität: 13.12.2018 AT 511062018
(43) Veröffentlichungstag der Anmeldung: 20.10.2021
(73) Patentinhaber: AVL List GmbH, 8020 Graz (AT)
(72) Erfinder: ALDRIAN, Andreas, 8144 Haselsdorf-Tobelbad (AT); WOLF, Christoph, 8055 Graz (AT); MA, Zhendong, 1180 Wien (AT); MAIER, Patrik, 8010 Graz (AT); SPRUNG, Samuel, 8020 Graz (AT)
(74) Vertreter: Patentanwälte Pinter & Weiss OG
(86) Internationale Anmeldenummer: PCT/AT2019/060437
(87) Internationale Veröffentlichungsnummer: WO 2020/118342

(56) Entgegenhaltungen:
- EP-A1- 3 297 247
- US-A1- 2003 147 534
- US-A1- 2012 127 928

## Beschreibung

Die Erfindung betrifft ein Kommunikationsmodul zur Datenübertragung zwischen zumindest einer Hardwarekomponente, die in ein internes Netz eines technischen Systems eingebunden ist, und einem Backend-Rechnersystem, welches an ein paketvermitteltes Datennetz angeschlossen ist. Weiters betrifft die Erfindung ein technisches System mit einem solchen Kommunikationsmodul und mit solchen Systemen ausführbare Verfahren.

Durch die Fortschritte in der Entwicklung "intelligenter" Hardwaresysteme und deren Einsatz in technischen Systemen sowohl im industriellen, im professionellen als auch im privaten Umfeld hat die Sicherung von Daten gegen unberechtigten Zugriff und Manipulationen erheblich an Wichtigkeit erhalten. Dies ist unter anderem damit zu begründen, dass eine Datenmanipulation, wie etwa ein Hackerangriff auf eingebettete Hardwaresysteme, unmittelbare Auswirkungen auf das Verhalten dieser Systeme hat und nicht nur die Intaktheit und Funktion dieser Systeme beeinträchtigen kann, sondern sogar eine Gefahr für Leib und Leben der Benutzer darstellen kann. Beispielhaft seien hier Lenk- oder Bremssysteme in autonomen, teilautonomen und konventionellen Fahrzeugen, Steuereinrichtungen von Flugzeugen oder Schaltanlagen in Infrastruktureinrichtungen, wie etwa für die Stromversorgung, angeführt. Von böswilligen Manipulationen der Funktionen solcher Systeme kann nicht nur eine Gefahr für einzelne, sondern auch für die Allgemeinheit ausgehen.

Darüber hinaus erzeugen viele Hardwaresysteme zahlreiche Daten, aus denen sich beispielsweise Informationen über das Verhalten, den Aufenthaltsort, oder gar über den gesundheitlichen Zustand von Benutzern auswerten lassen (beispielsweise bei Daten von Fitness-Trackern oder ähnlichem). Zu Beispielen solcher Daten zählen auch Telemetriedaten von (autonomen) Fahrzeugen, Sensor- und Steuerungsdaten von industriellen Anlagen, Forschungsdaten, aus denen sich Informationen über Forschungsprojekte von konkurrierenden Unternehmen oder Einrichtungen ableiten lassen, Kommunikationsdaten, etc. Für alle solche Daten besteht ein berechtigtes Interesse der Inhaber, dass diese Daten von Dritten nicht unberechtigt eingesehen bzw. verwendet werden können.

Technische Systeme, wie etwa ein (gegebenenfalls autonomes) Fahrzeug, eine Maschine oder Maschinenanordnung in einer industriellen Umgebung, eine Transporteinrichtung, eine Prüf- oder Messeinrichtung, wie etwa ein (Motor-)Prüfstand oder technische Überwachungseinrichtungen beinhalten üblicherweise eine Vielzahl an Hardwarekomponenten, die über ein internes Netz (oder gegebenenfalls mehrere interne Netze) miteinander kommunizieren, um die an das technische System gestellte Aufgabe zu bewerkstelligen. Die Hardwarekomponenten umfassen üblicherweise Sensoren und Aktoren, über die das technische System mit der (realen) Umgebung in eine Wechselwirkung tritt.

Damit solche komplexen Aufgaben von den Hardwarekomponenten umgesetzt werden können, sind diese mit jeweils eigenen (Micro-)Prozessoren und Speichereinheiten ausgestattet, die die Funktionen der Hardwarekomponente gemäß einer Programmlogik steuern.

Einen wesentlichen Teil dieser Programmlogik ist üblicherweise in einem nichtflüchtigen Speicher, beispielsweise einem Flash-Speicher, abgelegt, sodass er bei jedem Start bzw. jeder Initialisierung der Hardwarekomponente zur Verfügung steht. Dieser Teil wird üblicherweise als "Firmware" bezeichnet. Die Firmware bleibt zwar während des Betriebs der Hardware unverändert, dennoch sind Änderungen möglich, etwa wenn eine alte Version der Firmware durch eine neue Version ersetzt wird. Die neue Version wird dabei üblicherweise vom Hersteller der Hardwarekomponente von einem Backend-Rechnersystem über ein paketvermitteltes Datennetz, insbesondere das Internet bereitgestellt. Das Aktualisieren der Firmware kann entweder aufgrund eines Benutzereingriffs erfolgen, es kann von der Hardwarekomponente oder von einer anderen Komponente des technischen Systems ausgelöst werden, oder es kann vom Backend-Rechnersystem ausgelöst werden. Eine Angriffsstrategie liegt darin, die Firmware während der Übertragung über das Internet (oder ein anderes paketvermitteltes Datennetz) gegen eine korrumpierte Version auszutauschen und dadurch einen (Fern)zugriff auf Funktionalität der Hardwarekomponente zu erhalten. Bei einer unverschlüsselten Übertragung ist dies für technisch versierte Täter mit verhältnismäßig geringem Aufwand möglich, aber auch bei einer verschlüsselten Übertragung kann ein Angriff erfolgreich sein, etwa in Form eines Man-in-the-Middle-Angriffs oder indem eine der Übertragungskomponenten, über die die Ver- bzw. Entschlüsselung erfolgt, gehackt wird.

Ein weiterer Sicherheitsaspekt betrifft die Übermittlung von Daten, die von einer Hardwarekomponente erzeugt werden, an das Backend-Rechnersystem. Solche Daten können beispielsweise Telemetrie- oder Sensordaten sein, die beispielsweise zu Wartungs- oder Überwachungszwecken an das Backend-Rechensystem übermittelt werden. Diese Übermittlung soll einerseits aus Gründen der Datensicherheit abhörsicher erfolgen, andererseits muss auch hierbei eine Manipulation der Daten ausgeschlossen werden können. Durch eine gezielte Manipulation der Daten wäre es nämlich beispielsweise möglich, dem Backend-Rechensystem eine falsche Gefahrensituation vorzuspielen, etwa um eine (falsche) Reaktion oder einen falschen Alarm auszulösen.

Die Patentanmeldungen US 2003/147534 A1 und EP 3297247 A1 zeigen Beispiele von bekannten kommunikationstechnischen Anordnungen, bei denen Sicherheitsaspekte im Vordergrund stehen.

Es ist die Aufgabe der gegenständlichen Erfindung, Vorrichtungen und Verfahren bereitzustellen, mit denen die Übertragung von Daten zwischen Hardwarekomponenten, die in technische Systeme eingebettet sind, und einem Backend-Rechnersystem, das ans Internet oder ein anderes paketvermitteltes Datennetz angeschlossen ist, manipulations- und abhörsicher durchgeführt werden kann.

Diese und weitere Aufgaben werden erfindungsgemäß durch ein Kommunikationsmodul der eingangs genannten Art gelöst, welches ein gerätenahes Gateway und ein netzwerknahes Gateway aufweist, die über eine zwischenstationsfreie Punk-zu-Punkt-Verbindung miteinander verbunden sind, wobei das netzwerknahe Gateway eine Datenübertragungsschnittstelle zwischen dem paketvermittelten Datennetz und der Punkt-zu-Punkt-Verbindung bereitstellt und wobei das gerätenahe Gateway eine Datenübertragungsschnittstelle zwischen der Punkt-zu-Punkt-Verbindung und dem internen Netz bereitstellt. Die Punkt-zu-Punk-Verbindung stellt dabei ein nicht umleitbares "Nadelöhr" dar, das einen aus dem paketvermittelten Datennetz kommenden Angriff verhindert. Die Kommunikation zwischen dem gerätenahen und dem netzwerknahen Gateway ist strikt definiert und ein "Ausbrechen" daraus ist nicht möglich. Da die zwischenstationsfreie Punkt-zu-Punkt-Verbindung kein Routing erlaubt, ist es einem Angreifer nicht möglich, durch ein Umleiten der Kommunikation beliebige Komponenten anzusprechen. Sogar wenn es einem Angreifer gelungen sein sollte, Sicherheitsfunktionen des netzwerknahen Gateways zu umgehen oder auszuschalten, kann er dennoch keinen Zugriff auf das interne Netz oder die Hardwarekomponente erhalten.

In vorteilhafter Weise kann das gerätenahe Gateway ein Gateway-Sicherheitsmodul aufweisen und/oder das netzwerknahe Gateway kann ein Gateway-Sicherheitsmodul aufweisen. Solche Gateway-Sicherheitsmodule erlauben die Umsetzung komplexer Verschlüsselungs- und Signaturverfahren in hardwarenaher Weise.

In einer bevorzugten Ausführungsform kann zumindest ein Gateway-Sicherheitsmodul eine Kartenschnittstelle für eine Prozessorchipkarte aufweisen. Dies erleichtert die Serienfertigung der Gateways, da die konkreten Sicherheitsmerkmale (insbesondere die Definition und/oder Erzeugung der kryptographischen Schlüssel, die Auswahl und Definition der Sicherheitsprotokolle, etc.) in der Prozessorchipkarte gemäß einem kryptographischen System definiert sein kann. Die Prozessorchipkarte kann von dritten, auf dieses technische Gebiet spezialisierten Herstellern zugekauft werden, was die Entwicklung der Gateways erleichtert.

Die Erfindung betrifft weiters ein technisches System mit einem entsprechenden Kommunikationsmodul, wobei das technische System weiters zumindest eine Hardwarekomponente und zumindest ein internes Netz umfasst. Erfindungsgemäß lassen sich dadurch sehr komplexe technische Systeme, beispielsweise (autonome) Fahrzeuge, industrielle Anlagen, Transporteinrichtungen, Prüfstände oder Messeinrichtungen, gegen Datenmanipulationen und Datenspionage sichern.

In einer vorteilhaften Ausführungsform kann die Hardwarekomponente einen Sicherheitscontroller mit einem integrierten Kryptoprozessor, einen nichtflüchtigen Speicher und einen flüchtigen Speicher aufweisen. Dadurch lässt sich einerseits eine (zusätzliche) End-zu-End-Verschlüsselung der zwischen einem Backend-Rechensystem bzw. einem anderen berechtigten Datensender bzw. Datenempfänger und der Hardwarekomponente (bzw. umgekehrt) übermittelten Daten erreichen, andererseits kann etwa mittels digitaler Signaturen die Authentizität und Integrität der Daten sowohl durch die Hardwarekomponente selbst, als auch durch das Backend-Rechnersystem geprüft und sichergestellt werden. Indem in der Hardwarekomponente ein Sicherheitscontroller verbaut ist, können die Daten beispielsweise so verschlüsselt werden, dass nicht einmal der Hersteller des Kommunikationsmoduls oder das Backend-Rechnersystem die Daten entschlüsseln könnte. Beispielsweise können die Daten für einen berechtigten Datenempfänger (etwa den Besitzer des technischen Systems oder einen anderen Berechtigten) verschlüsselt werden, der die verschlüsselten Daten von dem Backend-Rechnersystem abrufen und dann entschlüsseln kann.

In einer weiteren vorteilhaften Ausgestaltung der Erfindung kann das technische System ein autonomes, teilautonomes oder konventionelles Fahrzeug gemäß einer der Autonomiestufen 0 bis 5 sein. Die Einteilung der Autonomiestufen bezieht sich dabei auf die in diesem Bereich üblicherweise angewendete und wohlbekannte Norm SAE J3016, die der SAE International herausgegeben wird in der zum Zeitpunkt des ältesten Anmeldetags der gegenständlichen Patentfamilie geltenden Fassung. Insbesondere bei Fahrzeugen höherer Autonomiestufen kann eine Datenmanipulation verheerende Folgen nach sich ziehen, sodass in diesem Bereich ein besonderer Bedarf an hochwertigen Sicherheitslösungen besteht.

In vorteilhafter Weise kann das technische System eine von einem Automatisierungssystem gesteuerte Maschinenanordnung, insbesondere ein Prüfstand sein. In zahlreichen industriellen Anwendungen, die von Automatisierungssystemen gesteuert werden, kommen unterschiedliche Hardwarekomponenten zum Einsatz, die Sensoren und Aktuatoren aufweisen. Erfindungsgemäß können diese Hardwarekomponenten "ferngewartet" werden, wobei einerseits die Firmware oder andere Anwendungssoftware sowie beispielsweise Parameterdaten von einem Backend-Rechnersystem aus aktualisiert werden können. Andererseits können auch Daten von der Hardwarekomponente zu dem Backend-Rechensystem übermittelt werden, etwa Telemetriedaten, mit denen beispielsweise Fehlfunktionen oder Wartungserfordernisse erkannt werden können.

Die Erfindung betrifft weiters ein Verfahren zur Übertragung von Gerätedaten einer Hardwarekomponente, die in ein internes Netz eines technischen Systems eingebunden ist, zu einem Backend-Rechnersystem, welches an ein paketvermitteltes Datennetz angeschlossen ist, wobei das Verfahren durch die folgenden Schritte gekennzeichnet ist:
- Übermitteln der Gerätedaten von der Hardwarekomponente über das interne Netz zu dem gerätenahen Gateway,
- Übermitteln der Gerätedaten von dem gerätenahen Gateway über die Punkt-zu-Punkt-Verbindung zu dem netzwerknahen Gateway,
wobei von dem gerätenahen Gateway oder dem netzwerknahen Gateway die Gerätedaten in eine verschlüsselte Instanz der Gerätedaten umgewandelt wird, und
- Übermitteln der verschlüsselten Instanz der Gerätedaten von dem netzwerknahen Gateway über das paketvermittelte Datennetz zu dem Backend-Rechnersystem.

Gerätedaten können jegliche Daten sein, die von der Hardwarekomponente gemessen oder erstellt werden, bzw. in einem Gerätespeicher der Hardwarekomponente gespeichert sein können. Der Begriff "Gerätedaten" umfasst sowohl die unverschlüsselten Gerätedaten, als auch Gerätedaten, die in verschlüsselter Form vorliegen, und die hierin auch als "verschlüsselte Instanz" der Gerätedaten bezeichnet werden. Als "verschlüsselte Instanz" der Gerätedaten werden somit Daten bezeichnet, aus denen sich mithilfe der jeweiligen kryptographischen Schlüssel und der entsprechenden kryptographischen Verfahren die unverschlüsselten Gerätedaten errechnen lassen. Gegebenenfalls können die Gerätedaten mehrmals überlagernd verschlüsselt werden. Beispielsweise kann die Hardwarekomponente die Gerätedaten gemäß einem eigenen Verschlüsselungsprotokoll verschlüsseln, das gegebenenfalls von der Funktionalität des Kommunikationsmoduls vollkommen getrennt und unabhängig sein kann. In dem Fall werden die Gerätedaten bereits als verschlüsselte Instanz an das gerätenahe Gateway des Kommunikationsmoduls übermittelt. Das Kommunikationsmodul erstellt dann eine weitere verschlüsselte Instanz dieser Gerätedaten.

In vorteilhafter Weise kann das Verfahren die folgenden Schritte aufweisen: Erstellen einer verschlüsselten Instanz der Gerätedaten unter Verwendung eines öffentlichen Schlüssels eines Empfängers der Daten, insbesondere des Backend-Rechnersystems, durch das gerätenahe Gateway, vorzugweise unter Verwendung des Gateway-Sicherheitsmoduls des gerätenahen Gateways, oder durch das netzwerknahe Gateway, vorzugweise unter Verwendung des Gateway-Sicherheitsmoduls des netzwerknahen Gateways. Die Verschlüsselung kann entweder von der Hardwarekomponente, von dem gerätenahen Gateway oder vom netzwerknahen Gateway durchgeführt werden, wobei die Sicherheit umso höher ist, je weniger Übermittlungsschritte unverschlüsselt erfolgen müssen. Gegebenenfalls können auch zusätzliche Ver- und Entschlüsselungsschritte vorgesehen sein, beispielsweise kann die Übertragung zwischen dem gerätenahen Gateway und dem netzwerknahen Gateway über die Punkt-zu-Punkt-Verbindung durch eine zusätzliche Verschlüsselung geschützt sein, die zwischen dem gerätenahen Gateway und dem netzwerknahen Gateway (oder auch zwischen der Hardwarekomponente und dem netzwerknahen Gateway) aufgebaut wird. Dies kann insbesondere dann vorteilhaft sein, wenn die Gerätedaten erst von dem netzwerknahen Gateway unter Verwendung des öffentlichen Schlüssels des Backend-Rechensystems verschlüsselt werden.

Die Begriffe "öffentlicher Schlüssel" und "privater Schlüssel" bezeichnen in bekannter Weise Schlüsselpaare gemäß asymmetrischer Kryptosysteme (sowohl im Zusammenhang mit Verschlüsselung/Entschlüsselung, als auch im Zusammenhang mit digitalen Signaturen).

In einer vorteilhaften Ausführungsform kann der Schritt des Übermittelns der verschlüsselten Instanz über das paketvermittelte Datennetz das Übermitteln der verschlüsselten Instanz zu einem Broker umfasst, und gemäß einem Protokoll erfolgt, welches rein über Push-Mechanismen funktioniert. Dadurch lässt sich das netzwerknahe Gateway zusätzlich gegen Hackerangriffe schützen, da mit derartigen Protokollen jeglicher Inbound-Traffic (d.h. eine "von außen her" über offene Ports eingeleitete Datenübertragung) unterbunden werden kann.

In vorteilhafter Weise kann das netzwerknahe Gateway die verschlüsselte Instanz der Gerätedaten vor der Übermittlung über das paketvermittelte Datennetz gemäß einem Netzwerk-Verschlüsselungsprotokoll verschlüsseln, wobei bewährte Protokolle verwendet werden können. Dies sperrt die Daten mit einer weiteren Sicherheitsschicht gegen einen unbefugten Zugriff. Diese Verschlüsselung kann vom Gateway-Sicherheitsmodul des netzwerknahen Gateways ausgeführt werden.

Gemäß einer weiteren vorteilhaften Ausführungsform kann die verschlüsselte Instanz der Gerätedaten Prüfdaten beinhalten, welche dem Backend-Rechensystem und/oder einem anderen berechtigten Datenempfänger eine Prüfung der Integrität und/oder Authentizität der Gerätedaten erlauben. Solche Prüfdaten können beispielsweise in an sich bekannter Weise Prüfsummen (Hashs) und digitale Signaturen verwenden, wobei diese Daten gegebenenfalls gemeinsam mit den Gerätedaten in einer Datenhülle verschlüsselt werden können.

In einem weiteren Aspekt betrifft die Erfindung ein Verfahren zum Speichern von Aktualisierungsdaten in einem Gerätespeicher einer Hardwarekomponente, die in ein internes Netz eines technischen Systems eingebunden ist, wobei die Aktualisierungsdaten für die Hardwarekomponente von einem Backend-Rechnersystem bereitgestellt werden und wobei das Verfahren die folgenden Schritte aufweist:
- Empfangen einer verschlüsselten Instanz der Aktualisierungsdaten durch das netzwerknahe Gateway über das paketvermittelte Datennetz von dem Backend-Rechnersystem,
- Übermitteln der Aktualisierungsdaten von dem netzwerknahen Gateway über die Punkt-zu-Punkt-Verbindung zu dem gerätenahen Gateway,
- Übermitteln der Aktualisierungsdaten an die Hardwarekomponente über das interne Netz,
wobei die verschlüsselte Instanz der Aktualisierungsdaten von dem gerätenahen Gateway oder dem netzwerknahen Gateway entschlüsselt wird, und
- Speichern der Aktualisierungsdaten in dem Gerätespeicher der Hardwarekomponente.

Dadurch lassen sich Aktualisierungsdaten, beispielsweise aktuelle Firmware oder Parameterdaten, in einer sicheren Weise von dem Backend-Rechnersystem zur Hardwarekomponente übermitteln. Gegebenenfalls kann wiederum zusätzlich eine weitere, unabhängige Verschlüsselung der Gerätedaten zwischen einem berechtigten Datensender und der Hardwarekomponente vorgesehen sein.

Aktualisierungsdaten können jegliche Daten sein, die in einem Gerätespeicher der Hardwarekomponente gespeichert sein können. Der Begriff "Aktualisierungsdaten" umfasst sowohl die unverschlüsselten Aktualisierungsdaten, als auch Aktualisierungsdaten, die in verschlüsselter Form vorliegen, und die hierin auch als "verschlüsselte Instanz" der Aktualisierungsdaten bezeichnet werden. Als "verschlüsselte Instanz" der Aktualisierungsdaten werden somit jegliche Daten bezeichnet, aus denen sich mithilfe der jeweiligen kryptographischen Schlüssel und der entsprechenden kryptographischen Verfahren die unverschlüsselten Aktualisierungsdaten errechnen lassen.

Die Aktualisierungsdaten können entweder von einem berechtigten Datensender mit einem öffentlichen Schlüssel der Hardwarekomponente oder des gerätenahen Gateways oder des netzwerknahen Gateways verschlüsselt worden sein und bereits in verschlüsselter Form an das Backend-Rechnersystem übermittelt worden sein. In dem Fall agiert das Backend-Rechnersystem nur als Vermittler, der selbst keinen Zugriff auf die unverschlüsselten Daten hat. Andererseits kann die verschlüsselte Instanz der Aktualisierungsdaten auch von dem Backend-Rechnersystem unter Verwendung eines öffentlichen Schlüssels der Hardwarekomponente, des gerätenahen Gateways, oder des netzwerknahen Gateways erstellt werden.

In vorteilhafter Weise kann das Verfahren die folgenden Schritte aufweisen: Entschlüsseln der verschlüsselten Instanz der Aktualisierungsdaten durch das netzwerknahe Gateway, vorzugsweise unter Verwendung des Gateway-Sicherheitsmoduls des netzwerknahen Gateways oder durch das gerätenahe Gateway, vorzugsweise unter Verwendung des Gateway-Sicherheitsmoduls des gerätenahen Gateways.

Wenn die Hardwarekomponente mit einem Sicherheitscontroller versehen ist, kann zusätzlich eine vollständige End-zu-End-Verschlüsselung umgesetzt werden. Andererseits können die Daten auch zu Hardwarekomponenten ohne eigenen Sicherheitscontroller auf sehr sichere Weise übermittelt werden, da die unverschlüsselten Daten lediglich im internen Netz, also beispielsweise über ein internes Feldbussystem, wie etwa einen CAN-Bus, und gegebenenfalls über die Punkt-zu-Punkt-Verbindung übermittelt werden. Gegebenenfalls kann die Übertragung zwischen dem netzwerknahen Gateway und dem gerätenahen Gateway über die Punkt-zu-Punkt-Verbindung wiederum durch eine zusätzliche Verschlüsselung geschützt sein, die zwischen dem gerätenahen Gateway (oder der Hardwarekomponente) und dem netzwerknahen Gateway aufgebaut wird. Die Entschlüsselung erfolgt vorzugsweise durch das gerätenahe Gateway oder die Hardwarekomponente, die beide keine direkte Anbindung an ein öffentliches Netzwerk aufweisen. Das Verfahren mit gewissen Einschränkungen auch mit einem vereinfachten Kommunikationsmodul ausgeführt werden, bei dem das gerätenahe Gateway über kein eigenes Gateway-Sicherheitsmodul verfügt.

In vorteilhafter Weise können die Aktualisierungsdaten eine Firmware, eine Anwendungssoftware und/oder Parameterdaten der Hardwarekomponente umfassen.

In einer weiteren vorteilhaften Ausführungsform kann der Schritt des Empfangens das Abrufen der verschlüsselten Instanz der Aktualisierungsdaten von einem Broker umfassen und gemäß einem Protokoll erfolgen, welches rein über Push-Mechanismen funktioniert.

Erfindungsgemäß kann gemäß einer weiteren Ausführungsform vorgesehen sein, dass die verschlüsselte Instanz der Aktualisierungsdaten Prüfdaten beinhaltet, welche dem Gateway-Sicherheitsmodul des gerätenahen Gateways, und/oder dem Gateway-Sicherheitsmodul des netzwerknahen Gateways und/oder dem Sicherheitscontroller der Hardwarekomponente eine Prüfung der Integrität und/oder Authentizität der Aktualisierungsdaten erlauben. Mithilfe einer Prüfung der Authentizität und Integrität der erhaltenen Instanz der Aktualisierungsdaten, beispielsweise mittels digitaler Signaturen gemäß dem vom Sicherheitscontroller bzw. Gateway-Sicherheitsmodul verwendeten kryptographischen System kann sichergestellt werden, dass z.B. der Austausch der Firmware (der üblicherweise durch sogenanntes "Flashen" des entsprechenden Gerätespeichers erfolgt, nur dann durchgeführt wird, wenn die Vertrauenswürdigkeit der Daten vom Sicherheitscontroller (bzw. Gateway-Sicherheitsmodul) sichergestellt ist.

### Definitionen:

Als "**technisches System**" wird im Zusammenhang mit der gegenständlichen Offenbarung eine Vorrichtung bezeichnet, welche zumindest ein internes Netz und zumindest eine Hardwarekomponente aufweist, die zu einer Kommunikation über dieses interne Netz befähigt ist.

Als "**internes Netz**" wird im Zusammenhang mit der gegenständlichen Offenbarung eine vorzugsweise auf das technische System begrenzte Kommunikations-Infrastruktur des technischen Systems bezeichnet, die zum Datenaustausch zwischen Hardwarekomponenten geeignet ist. Je nach Art des technischen Systems kann das interne Netz gemäß einem routingfähigen Protokoll oder einem nicht routingfähigen Protokoll funktionieren.

Als "**Hardwarekomponente**" wird im Zusammenhang mit der gegenständlichen Offenbarung eine technische Einheit angesehen, die zumindest einen Prozessor oder Microcontroller und eine Speichereinheit aufweist, und die zu einer Kommunikation über das jeweilige interne Netz befähigt ist.

Als "**Firmware**" wird im Zusammenhang mit der gegenständlichen Offenbarung eine in einem Speicher der Hardwarekomponente gespeicherte Programmlogik bezeichnet, welche für den Betrieb der Hardwarekomponente erforderlich ist. Je nach Komplexität der Hardwarekomponente kann die Firmware den Betrieb der Hardwarekomponente vollständig definieren, gegebenenfalls unter Verwendung veränderbarer Parameter, oder sie kann der Hardwarekomponente erlauben, Anwendungsprogramme auszuführen.

Als "**Anwendungssoftware**" der Hardwarekomponente wird im Zusammenhang mit der gegenständlichen Offenbarung allgemein eine von der Hardwarekomponente ausführbare Programmlogik bezeichnet.

Als "**Parameterdaten**" der Hardwarekomponente werden im Zusammenhang mit der gegenständlichen Offenbarung Daten bezeichnet, die Werte repräsentieren, welche den Betrieb der Hardwarekomponente beeinflussen.

Als "**Backend-Rechnersystem**" wird im Zusammenhang mit der gegenständlichen Offenbarung eine Computerinfrastruktur bezeichnet, in welcher die Hardwarekomponente betreffende Daten gespeichert sind. Das Backend-Rechensystem ist in der Lage über das paketvermittelte Datennetz zu kommunizieren, um Daten über dieses paketvermittelte Datennetz zu dem technischen System, bzw. über das Kommunikationsmodul des technischen Systems zu der Hardwarekomponente zu senden, und Daten von dieser Hardwarekomponente über das Kommunikationsmodul des technischen Systems zu empfangen.

Als "**Sicherheitscontroller**" wird im Zusammenhang mit der gegenständlichen Offenbarung eine Einheit bezeichnet, die vorzugsweise als Hardware, insbesondere als ein Mikrochip ausgebildet sein kann, wobei der Sicherheitscontroller eine Hardwarekomponente um grundlegende Sicherheitsfunktionen erweitert. Die grundlegenden Sicherheitsfunktionen betreffen insbesondere die Erzeugung kryptographischer Schlüssel, deren sichere Verwahrung (eine Extraktion von privaten Schlüsseln soll verhindert werden), die Ver- und Entschlüsselung von Daten und die Handhabung von digitalen Signaturen. Der Sicherheitscontroller enthält zumindest eine eindeutige Kennung, die zur Identifizierung der Hardwarekomponente genutzt werden kann. Aus Gründen der Größenoptimierung ist es bevorzugt, den Sicherheitscontroller als einen einzigen Microchip auszubilden, der in die jeweilige Hardwareeinheit eingebaut wird. Falls die Baugröße der Hardwareeinheit dies zulässt, ist es jedoch auch möglich, ein System mit einer Kartenschnittstelle und einer Prozessorchipkarte zu verwenden, wie dies für das untenstehend definierte Gateway-Sicherheitsmodul beschrieben ist.

Ein Sicherheitscontroller umfasst vorzugsweise zumindest einen Kryptoprozessor. Der Kryptoprozessor kann vorzugsweise einen Zufallszahlengenerator, zumindest einen Schlüsselgenerator (z.B. gemäß RSA), zumindest einen Hashgenerator (z.B. gemäß eines Secure Hash Algorithmus - SHA), sowie zumindest eine Verschlüsselungs-/Entschlüsselungs-/Signatureinheit aufweisen. Weiters weist der Sicherheitscontroller üblicherweise einen nichtflüchtigen und/oder einen flüchtigen Speicher auf. Im nichtflüchtigen Speicher können beispielsweise ein Endorsement-Key und ein Storage-Root-Key gespeichert sein. Als Endoresement-Key wird ein dem Sicherheitscontroller zugewiesener kryptographischer Schlüssel bezeichnet, der vorzugsweise bereits bei der Herstellung im nichtflüchtigen Speicher vorzugsweise unveränderbar abgelegt wird. Als Storage-Root-Key wird ein im geschützten, nicht flüchtigen Speicher abgelegter kryptographischer Schlüssel bezeichnet, der jedoch durch spezielle Funktionen veränderbar ist, beispielsweise wenn der Sicherheitscontroller von einem neuen Benutzer in Besitz genommen wird. Aus Sicherheitsgründen dürfen der Endorsement-Key und der Storage-Root-Key den sicheren Speicher nicht verlassen können. Deswegen muss der Kryptoprozessor diese Keys verwenden können um die kryptographische Operation ausführen zu können. Im flüchtigen Speicher des Sicherheitscontrollers können beispielsweise Plattformkonfigurationsregister, Attestation-Identity-Keys und andere gespeicherte Schlüssel abgelegt sein.

Zu Beispielen von Sicherheitscontrollern zählen Trusted-Platform-Module (TPM) gemäß der TCG-Spezifikation der Trusted Computing Group. Es wird im Zusammenhang mit der gegenständlichen Offenbarung vorausgesetzt, dass der Fachmann detaillierte Kenntnisse über die TCG-Spezifikation in der zum Zeitpunkt des ältesten Anmeldetags der gegenständlichen Patentfamilie geltenden Fassung hat.

Als "**Kryptoprozessor"** wird im Zusammenhang mit der gegenständlichen Offenbarung ein Mikroprozessor bezeichnet, der kryptographische Grundfunktionen, insbesondere die sichere Datenkommunikation, die Ver- und Entschlüsselung, die Authentisierung und/oder die Verwaltung von Kryptologie-Schlüsseln in sich vereinigt.

Als "**Gateway-Sicherheitsmodul**" wird im Zusammenhang mit der gegenständlichen Offenbarung eine Hardwareeinheit bezeichnet, die ein Gateway um grundlegende Sicherheitsfunktionen erweitert. Das Gateway-Sicherheitsmodul kann ähnlich aufgebaut sein, wie ein Sicherheitscontroller, oder sogar baugleich sein. Das Gateway-Sicherheitsmodul kann eine Kartenschnittstelle aufweisen, in die eine Prozessorchipkarte eingesetzt werden kann, die einen wesentlichen Teil des Gateway-Sicherheitsmoduls enthält, und in der insbesondere die grundlegenden Sicherheitsfunktionen kodiert sein können. Dadurch lässt sich etwa bei einer Serienfertigung des Gateway-Sicherheitsmoduls durch Kombination mit der jeweiligen Prozessorchipkarte ein hardwaretechnisch einzigartiges Gateway-Sicherheitsmodul erstellen.

Es ist zu beachten, dass die Unterscheidung zwischen den Begriffen "Gateway-Sicherheitsmodul" und "Sicherheitscontroller" weder eine funktionelle, noch eine hardwaretechnische Verschiedenheit impliziert, sondern lediglich deren Zuordnung (einmal zu einer Hardwareeinheit, das andere Mal zu einem Gateway) definiert. Insbesondere können Gateway-Sicherheitsmodul und Sicherheitscontroller funktionell und/oder hardwaretechnisch identisch oder unterschiedlich ausgebildet sein. Auch können mehrere Gateway-Sicherheitsmodule unterschiedlicher Gateways jeweils als unterschiedliche Hardware ausgebildet sein und auch die Sicherheitscontroller unterschiedlicher Hardwareeinheiten müssen nicht identisch sein, sondern können eine unterschiedliche Bauart aufweisen. Alle Merkmale, die hierin in Zusammenhang mit dem Sicherheitscontroller beschrieben werden, können somit auch auf das Gateway-Sicherheitsmodul angewendet werden und vice versa, sofern nichts anderes ausdrücklich bestimmt ist.

Als "**Prozessorchipkarte**" wird im Zusammenhang mit der gegenständlichen Offenbarung eine in eine Kartenschnittstelle einsteck- bzw. einsetzbare Karte - üblicherweise aus Kunststoff - bezeichnet, die mit einem eingebauten integrierten Schaltkreis (Chip) versehen ist. Der integrierte Schaltkreis umfasst eine Hardware-Logik, zumindest einen Speicher und zumindest einen Mikroprozessor. Prozessorchipkarten werden durch spezielle Kartenlesegeräte angesteuert, die im Zusammenhang mit der gegenständlichen Offenbarung als "Kartenschnittstelle" bezeichnet werden. Prozessorchipkarten werden im allgemeinen Sprachgebrauch oft auch als "Smartcard" oder "Integrated Circuit Card (ICC)" bezeichnet. Die Prozessorchipkarte weist häufig ein Scheckkartenformat auf, sie kann jedoch auch andere Formate aufweisen, wie etwa ein SIM-Karten-Format (z.B. Standard-SIM, Mini-SIM, Micro-SIM, Nano-SIM). Gegebenenfalls kann die Prozessorchipkarte auch in Form einer Embedded-SIM direkt im entsprechenden Gerät verbaut und nicht auswechselbar sein.

Als "**Hardware-Sicherheitsmodul**" (im Englischen auch als "Hardware Security Module-HSM" bezeichnet) wird im Zusammenhang mit der gegenständlichen Offenbarung allgemein ein internes oder externes Peripheriegerät bezeichnet, das in einer Computerinfrastruktur (wie etwa dem hierin beschriebenen Backend-Rechnersystem) für die effiziente und sichere Ausführung kryptographischer Operationen oder Applikationen dient. Dies ermöglicht zum Beispiel, die Vertrauenswürdigkeit und die Integrität von Daten und den damit verbundenen Informationen IT-Systemen sicherzustellen.

Als "kryptographischer Schlüssel" wird im Zusammenhang mit der gegenständlichen Offenbarung allgemein eine Information bezeichnet, die einen kryptographischen Algorithmus parametrisiert und ihn steuert. Insbesondere wird zwischen Entschlüsselungsschlüsseln und Verschlüsselungsschlüsseln unterschieden, die jeweils miteinander verknüpft sind. Bei symmetrischen Verschlüsselungssystemen sind der Entschlüsselungsschlüssel und der Verschlüsselungsschlüssel identisch. Asymmetrische Verschlüsselungssystemen hingegen verwenden Schlüsselpaare, die aus einem öffentlichen Schlüssel ("Public Key") und einem privaten Schlüssel ("Private Key") bestehen. Asymmetrische kryptographische Schlüssel können nicht nur zum Ver- und Entschlüsseln, sondern auch zum digitalen Signieren verwendet werden.

Der Begriff **"kryptographisches System"** oder "Kryptosystem" wird im Zusammenhang mit der gegenständlichen Offenbarung generisch sowohl für Systeme zur Ver- und Entschlüsselung, für Schlüsselaustauschverfahren und für Verfahren zur digitalen Signatur verwendet. Ein bekanntes Beispiel für ein kryptographisches System ist das RSA-Kryptosystem, das auf einer Einwegfunktion auf Primzahlbasis funktioniert. Weitere Beispiele für kryptographische Systeme basieren auf der Ellyptischen-Kurven-Kryptograhie (Elliptic Curve Cryptography - ECC). Zu Beispielen hierfür zählen Elliptic Curve Diffie-Hellman (ECDH), Elliptic Curve Integrated Encryption Scheme (ECIES), auch Integrated Encryption Scheme (IES) genannt, Elliptic Curve Digital Signature Algorithm (ECDSA) und ECMQV, ein von Menezes, Qu und Vanstone vorgeschlagenes Protokoll zur Schlüsselvereinbarung.

Als **"Netzwerk-Verschlüsselungsprotokoll"** wird im Zusammenhang mit der gegenständlichen Offenbarung ein Netzwerkprotokoll bezeichnet, das die verschlüsselte Datenübertragung über ein Rechnernetz garantieren. Ein solches Netzwerk-Verschlüsselungsprotokoll kann beispielsweise aus einem Schlüsselaustauschprotokoll und symmetrischen Verfahren bestehen, die die Vertraulichkeit und Integrität der übertragenen Nachrichten sicherstellen. Zu Beispielen von Standards für Netzwerk-Verschlüsselungsprotokolle zählen Transport-Layer-Security (TLS), Secure Shell (SSH), IPsec, WPA2.

Als "Gateway" wird im Zusammenhang mit der gegenständlichen Offenbarung eine Komponente bezeichnet, die eine Verbindung zwischen zwei Kommunikationssystemen und insbesondere zwischen zwei Netzwerksystemen unterschiedlicher Protokolle (die gleichen oder unterschiedlichen Schichten im OSI-Modell zuzuordnen sind) herstellt.

Als **"Punkt-zu-Punkt-Verbindung"** wird im Zusammenhang mit der gegenständlichen Offenbarung allgemein ein direkter Verbindungsweg ohne Zwischenstationen verstanden.

Darunter fällt beispielsweise die Kommunikation in den unteren Netzwerkschichten 1-3 im OSI-Modell. Die Kommunikation wird über die Punkt-zu-Punkt-Verbindung gemäß einem nicht-routingfähigen Protokoll ausgeführt. Ein Beispiel für solch eine Verbindung ist eine Direktverbindung über ein serielles Bussystem, beispielsweise einen Universal Serial Bus (USB).

Als "**Verfahren, das rein über Push-Mechanismen funktioniert**" wird im Zusammenhang mit der gegenständlichen Offenbarung ein Verfahren bezeichnet, bei dem die Kommunikation immer über einen zwischengeschalteten Broker gemäß einem Publisher-Subscriber-Modell vermittelt wird. Dabei ist es insbesondere nicht erforderlich, eine direkte End-zu-End-Verbindung herzustellen. Beispiele für solche Verfahren bieten Kommunikationsverfahren, die gemäß der MQTT-Spezifikation ("Message Queuing Telemetry Transport") aufgebaut sind, insbesondere gemäß der MQTT-Spezifikation in der zum Zeitpunkt des ältesten Anmeldetags der gegenständlichen Patentfamilie geltenden Fassung.

Als "**Broker**" wird im Zusammenhang mit der gegenständlichen Offenbarung ein Server bezeichnet, der die Nachrichten verwaltet, die gemäß einem Publisher-Subscriber-Modell, bzw. dem Verfahren, das rein über Push-Mechanismen funktioniert, bereitgestellt bzw. abgerufen werden.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
Fig. 1 eine schematische Darstellung der an einer Datenübertragung zwischen einem Backend-Server und einer Hardwarekomponente gemäß der Erfindung beteiligten Komponenten in einer Blockdarstellung,
Fig. 2 eine vereinfachte schematische Darstellung des in Fig. 1 dargestellten Datenübertragungsweges und
Fig. 3 eine schematische Blockdarstellung eines gesicherten Kommunikationssystems zwischen mehreren Backend-Rechnersystemen und mehreren technischen Systemen.

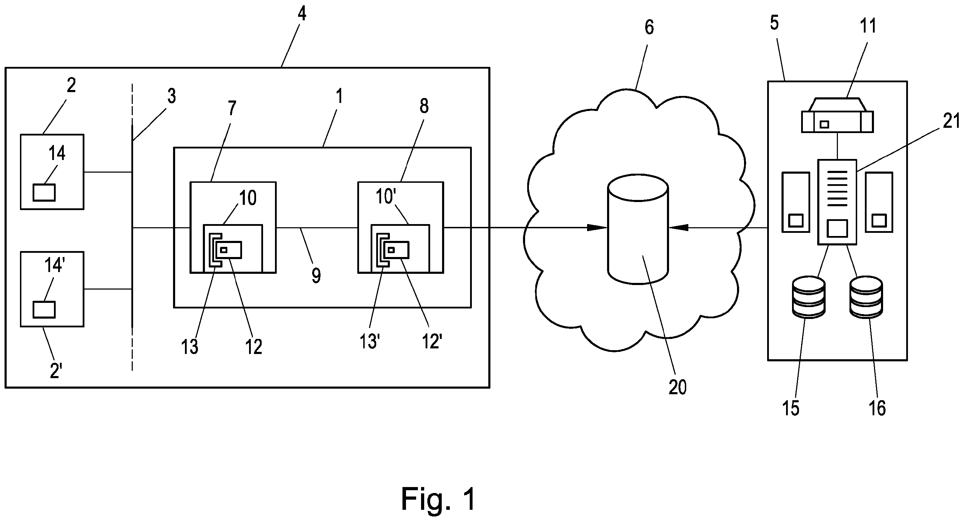

Fig. 1 zeigt eine in einer schematischen Darstellung die wesentlichen Entitäten, die im Umfeld der erfindungsgemäßen Verfahren und Vorrichtungen vorgesehen sind. Ein technisches System 4 weist eine Kommunikationsmodul 1, ein internes Netz 3 und eine Anzahl an Hardwarekomponenten 2, 2' auf, die über das interne Netz 3 miteinander und mit dem Kommunikationsmodul 1 verbunden sind. Jede der in Fig. 1 dargestellten Hardwarekomponenten 2, 2` weist einen Sicherheitscontroller 14, 14' auf, es können jedoch in dem technischen System 4 auch herkömmliche Hardwarekomponenten an das interne Netz 3 angeschlossen sein, die über keinen Sicherheitscontroller verfügen.

Das Kommunikationsmodul 1 umfasst ein gerätenahes Gateway 7 und ein netzwerknahes Gateway 8, die mittels einer Punkt-zu-Punkt-Verbindung 9 miteinander verbunden sind. Das gerätenahe Gateway 7 stellt eine Kommunikationsverbindung zwischen dem internen Netz 3 und der Punkt-zu-Punkt-Verbindung 9 her und das netzwerknahe Gateway 8 stellt eine Kommunikationsverbindung zwischen der Punkt-zu-Punkt-Verbindung 9 und einem paketvermittelten Datennetz 6 her. Das paketvermittelte Datennetz kann ein beliebiges Nah- oder Weitverkehrsnetz sein, insbesondere das Internet.

Die Verbindung über das paktvermittelte Datennetz 6 dient dem technischen System 4 insbesondere dazu, Daten mit einer als Backend-Rechnersystem 5 bezeichneten Rechneranordnung auszutauschen. Das Backend-Rechnersystem 5 weist eine als "Datencenter" 21 bezeichnete Computerinfrastruktur auf, wobei es sich beispielsweise um ein serverbasierendes Computernetz eines Herstellers oder Anbieters der Hardwarekomponenten 2, 2' handeln kann. Das Backend-Rechnersystem 5 umfasst weiters eine oder mehrere Datenbanken, in denen die Hardwarekomponenten 2, 2` betreffende Daten gespeichert sind. In Fig. 1 sind ein Software-Repository 15 und ein Firmware-Repository 16 symbolisch dargestellt, in denen Software bzw. Firmware für Hardwarekomponenten verschlüsselt gespeichert sind.

Die Kommunikation zwischen dem Backend-Rechnersystem 5 und dem netzwerknahen Gateway 8 des Kommunikationsmoduls 1 des technischen Systems 4 wird über einen Broker 20 geführt und gemäß einem Protokoll durchgeführt, das rein auf Push-Mechanismen basiert. Solche Protokolle, zum Beispiel gemäß der MQTT-Spezifikation, erlauben auf Seiten des Kommunikationsmoduls 1 die Umsetzung von Firewall-Richtlinien, die Incoming Traffic sperren. Eine Manipulation des Systems über Webdienste und ein Aufbau einer End-zu-End-Verbindung bis in das Kommunikationsmodul 1 kann somit ausgeschlossen werden. Bei Protokollen, die rein über Push-Mechanismen funktionieren, wie etwa gemäß dem MQTT-Protokoll, wird bekanntermaßen keine direkte End-zu-End-Verbindung hergestellt, sondern die Kommunikation wird immer über den zwischengeschalteten Broker 20 vermittelt, der Daten von einem "Publisher" erhält, und sie für einen oder mehrere "Subscriber" bereitstellt, wobei vorzugsweise eine zertifikatsgestützte Identifikation von Publisher und/oder Subscriber und gegebenenfalls eine Verschlüsselung der Daten vorgesehen sein kann. Jeder Endpunkt "öffnet" die Kommunikation zum Broker 20 von sich aus, und diese wird nicht "von außen" eingeleitet. Da beide Kommunikationspartner sowohl als Subscriber, als auch als Publisher agieren können, ist es möglich, Daten in beiden Richtungen auszutauschen, ohne dass dazu ein potentiell angreifbarer Webdienst eingerichtet werden muss. Vom Kommunikationsmodul 1 (d.h. vom netzwerknahen Gateway 7) aus wird dazu in definierten Abständen eine Verbindung zum Broker 20 hergestellt und es werden entweder Daten für einen Abruf durch berechtigte Dritte (insbesondere vom Backend-Rechnersystem 5) bereitgestellt (d.h. das Kommunikationsmodul 1 agiert als Publisher) oder es werden Daten von Dritten abgerufen (d.h. das Kommunikationsmodul 1 agiert als Subscriber). In analoger Weise kann das Backend-Rechnersystem 5 sowohl als Publisher, als auch als Subscriber agieren um Daten von dem Kommunikationsmodul 1 (bzw. von einer "dahinterliegenden" Hardwarekomponente 2) zu erhalten oder um Daten an das Kommunikationsmodul 1 (bzw. an die Hardwarekomponente 2) zu senden.

Die Sicherheitscontroller 14, 14' der Hardwarekomponenten 2, 2` können beispielsweise als integrierte Schaltung bzw. Hardwarechip ausgebildet sein, wodurch es möglich ist, auch verhältnismäßig kleine Hardwarekomponenten mit einem solchen Sicherheitscontroller 14, 14' auszustatten. Die Sicherheitscontroller 14, 14` erweitert die Hardwarekomponenten 2, 2` um grundlegende Sicherheitsfunktionen gemäß zumindest einem kryptographischen System. Die Sicherheitscontroller können beispielsweise einer Spezifikation der Trusted Computing Group (TCG) entsprechen und als "Trusted Platform Module" (TPM) ausgebildet sein.

Das gerätenahe Gateway 7 weist ein Gateway-Sicherheitsmodul 10 auf, welches eine Kartenschnittstelle 13 für eine Prozessorchipkarte 12 umfasst und das netzwerknahe Gateway 8 weist ein weiteres Gateway-Sicherheitsmodul 10` mit einer Kartenschnittstelle 13' und einer Prozessorchipkarte 12' auf. Gegebenenfalls kann zur Vereinfachung des Hardwareaufwandes auf das Gateway-Sicherheitsmodul 10 des gerätenahen Gateways 7 verzichtet werden, wobei dann die entsprechenden Ver- und Entschlüsselungsfunktionen von den Sicherheitsmodulen 14, 14' der Hardwarekomponenten 2, 2` und/oder dem Gateway-Sicherheitsmodul 10' des netzwerknahen Gateways 8 übernommen werden.

Die Sicherheitscontroller 14, 14' der Hardwarekomponenten 2, 2' und die Gateway-Sicherheitsmodule 10, 10' der Gateways 7, 8 enthalten jeweils eine eindeutige Kennung, die zur Identifizierung der entsprechenden Hardwarekomponente bzw. des jeweiligen Gateways dient. Entsprechende kryptographische Systeme, die von den Sicherheitscontrollern und Gateway-Sicherheitsmodulen verwendet werden können, sind im Fachbereich bekannt.

Die Sicherheitsfunktionen im Backend-Rechnersystem 5, insbesondere die Verwaltung und Verteilung kryptographischer Schlüssel, die Verschlüsselung, Entschlüsselung und digitale Signierung können von einem Hardware-Sicherheitsmodul 11 verwaltet werden. Das Hardware-Sicherheitsmodul 11 kann auch über die öffentlichen Schlüssel der Sicherheitscontroller 14, 14` und Gateway-Sicherheitsmodule 10, 10' im System verfügen. Dies ist jedoch keine zwingende Voraussetzung, da das Backend-Rechnersystem 5 auch Daten empfangen und speichern kann, die es selbst nicht entschlüsseln darf, beispielsweise wenn diese (von der Hardwarekomponente gesammelten) Daten für einen Dritten (der hierin als berechtigter Datenempfänger bezeichnet wird) bestimmt und mit dessen öffentlichem Schlüssel verschlüsselt sind. Andererseits können von dem Backend-Rechensystem 5 gehandhabte Aktualisierungsdaten von einem Dritten stammen (der hierin auch als berechtigter Datensender bezeichnet wird) und von diesem bereits verschlüsselt wurden.

Die für die kryptographischen Verfahren vorgesehenen Einheiten, insbesondere die Gateway-Sicherheitsmodule 10, die Sicherheitscontroller 14 und die Hardware-Sicherheitsmodule 11 können gegebenenfalls mehrere unterschiedliche kryptographische Systeme unterstützen.

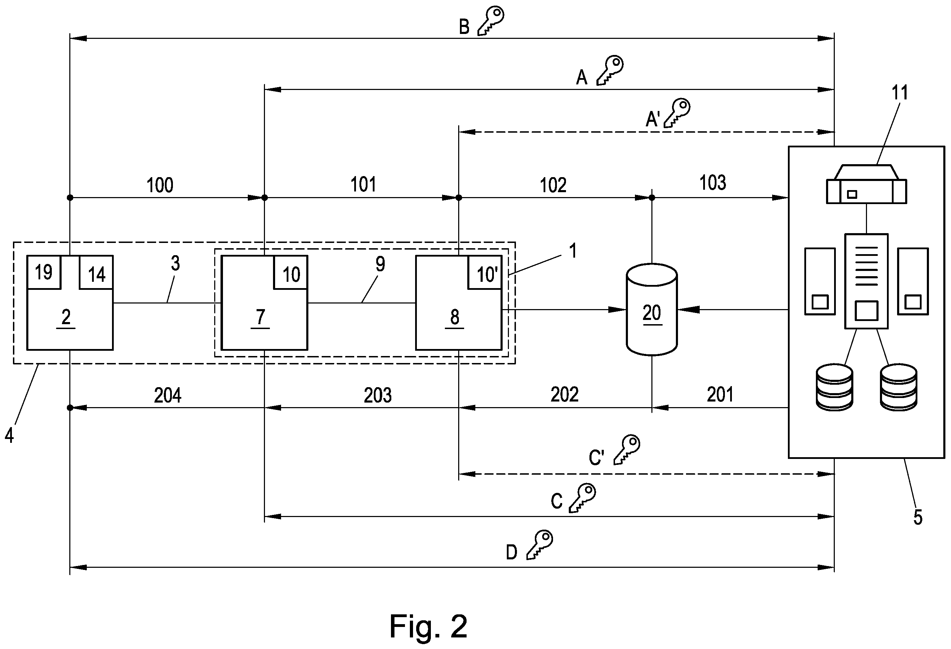

Die oben beschriebene Anordnung erlaubt eine überaus wirkungsvolle und starke Sicherung von Kommunikationsverbindungen zwischen den Hardwarekomponenten 2, 2' und dem Backend-Rechnersystem 5 (bzw. einem Dritten berechtigten Datenempfänger und/oder Datensender). Eine beispielhafte Kommunikation von Daten von der Hardwareeinheit 2 zu dem Backend-Rechnersystem 5 und von dem Backend-Rechnersystem 5 zu der Hardwareeinheit 2 wird im Folgenden unter Bezugnahme auf die schematische Darstellung in Fig. 2 beschrieben.

Das Gateway-Sicherheitsmodul 10 des gerätenahen Gateways 7, das Gateway-Sicherheitsmodul 10` des netzwerknahen Gateways 8, das Hardware-Sicherheitsmodul 11 des Backend-Rechnersystems 5 und gegebenenfalls der Sicherheitscontroller 14 des Hardwaresystems 2 sind in der Lage, ihre Sicherheitsfunktionalitäten gemäß zumindest einem gemeinsamen kryptographischen System abzuarbeiten.

Um Daten von der Hardwarekomponente 2 zu dem Backend-Rechensystem 5 zu übermitteln, wird zuerst eine Initialisierung durchgeführt, wobei der Sicherheitscontroller 14, die beiden Gateway-Sicherheitsmodule 10, 10 und das Hardware-Sicherheitsmodul 11 (bzw. ein entsprechendes Sicherheitsmodul eines Dritten, der als Datenempfänger oder -sender agieren soll) jeweils Schlüsselpaare (bestehend aus einem öffentlichen und einem privaten Schlüssel) erzeugen und die öffentlichen Schlüssel untereinander in gesicherter Weise austauschen. Diese Initialisierungsphase kann bei der "Inbetriebnahme" bzw. Personalisierung des Kommunikationsmoduls 1 gegebenenfalls bereits vor der Auslieferung des Kommunikationsmoduls 1 durch den Hersteller erfolgen. Das Kommunikationsmodul 1 ist nach dieser Initialisierungsphase unmittelbar einsatzbereit und verfügt über alle Daten und Voraussetzungen, die zum Ausführen der erfindungsgemäßen Verfahren erforderlich sind. Üblicherweise sind die Kommunikationswege, für die das Kommunikationsmodul 1 vorgesehen sind, nach der Initialisierungsphase festgelegt und ändern sich in weiterer Folge nicht, bzw. können nur durch ein Löschen und ein neuerliches Initialisieren geändert werden.

Daten, die während des Betriebs des technischen Systems 4 über das interne Netz 3 (z.B. einen CAN-Bus eines Fahrzeugs) übermittelt werden, können vom gerätenahen Gateway 7 erfasst, von dem gerätenahen Gateway 7 oder dem netzwerknahen Gateway 8 entsprechend den erfindungsgemäßen Verfahren verschlüsselt und zu dem Backend-Rechnersystem 5 übermittelt werden. In diesem Fall ist im Grunde das gerätenahe Gateway 7 (bzw. das netzwerknahe Gateway) als Endpunkt der gesicherten Übertragungskette anzusehen. Das Verfahren kann dabei in Verbindung mit Hardwarekomponenten ausgeführt werden, die keinen eigenen Sicherheitscontroller 14 haben. Dieses Verfahren wird in der untenstehenden Beschreibung als Variante A bezeichnet. Der Fall, bei dem das netzwerknahe Gateway die Verschlüsselung vornimmt, wird in der Fig. als Variante A' bezeichnet. Auf eine detaillierte Beschreibung dieser Variante A' wird jedoch der Übersichtlichkeit halber verzichtet, da die Umsetzung dieser Variante im Können des Durchschnittsfachmanns, der Kenntnis von der gegenständlichen Offenbarung hat, liegt.

Zusätzlich ist es gemäß der Erfindung auch möglich, eine gesicherte Verbindung von der Hardwarekomponente 2 zu dem Backend-Rechnersystem 5 (bzw. zu einem diesem Backend-Rechensystem 5 nachgelagerten dritten Datenempfänger bzw. Datensender) umzusetzen, sofern die entsprechende Hardwarekomponente 2 über einen entsprechenden Sicherheitscontroller 14 verfügt. Diese Möglichkeit wird in der untenstehenden Beschreibung als Variante B bezeichnet.

Gemäß Variante A erzeugt das gerätenahe Gateway 7 unter Verwendung des Gateway-Sicherheitsmoduls 10 einen geheimen Einmal-Schlüssel und verwendet eine authentifizierte Verschlüsselungsfunktion, um die zu übermittelnden Daten mit dem Einmal-Schlüssel zu verschlüsseln. Dann erstellt das Gateway-Sicherheitsmodul 10 einen Parametersatz für einen One-Pass-Schlüsselaustausch, wobei diese Parameter einen öffentlichen Schlüssel des Backend-Rechnersystems 5 (bzw. einer darin enthaltenen Einheit) umfassen. Das Gateway-Sicherheitsmodul 10 verschlüsselt den Einmal-Schlüssel unter Verwendung eines Key-Wrapping-Schemas und erzeugt ein Datenhüllpaket ("Data-Envelope"), das alle diese Daten enthält.

Gemäß Variante B kann bereits von dem Sicherheitscontroller 14 der Hardwarekomponente 2 eine unabhängige Verschlüsselung der Gerätedaten durchgeführt werden, wobei die entsprechenden Gerätedaten über das interne Netz 3 bereits in einer gesicherten Weise von der Hardwarekomponente 2 zu der gerätenahen Gateway 7 übermittelt werden (Schritt 100). Die von der Hardwarekomponente 2 angewendete Verschlüsselung kann unabhängig von dem kryptographischen System sein, das von dem Kommunikationsmodul 1 angewendet wird. In dem Fall wendet das Kommunikationsmodul 1 die erfindungsgemäße Verschlüsselung auf bereits verschlüsselte Gerätedaten an.

Das gerätenahe Gateway 7 übermittelt das Datenhüllpaket über die (vorzugsweise nicht routingfähige) Punkt-zu-Punkt-Verbindung 9 an das netzwerknahe Gateway 8 (Schritt 101).

Das netzwerknahe Gateway 8 agiert als Publisher und baut eine gemäß einem Netzwerk-Verschlüsselungsprotokoll (z.B. TLS) gesicherte Verbindung mit dem Broker 20 auf, wobei sowohl eine Client-Authentifizierung, als auch eine Server-Authentifizierung erfolgt. Dann überträgt das netzwerknahe Gateway als Publisher das Datenhüllpaket an einen Kanal (dieser wird auch als Thema oder Topic bezeichnet, z.B. MQTT-Topic) des Brokers (Schritt 102).

Auch das Backend-Rechnersystem 5 baut eine gemäß einem Netzwerk-Verschlüsselungsprotokoll (z.B. TLS) gesicherte Verbindung mit dem Broker 20 auf, agiert als Subscriber des Kanals, und empfängt das Datenhüllpaket (Schritt 103). Gegebenenfalls übermittelt das Backend-Rechnersystem 5 das Datenhüllpaket an einen Empfänger im Backend-Rechnersystem 5.

Unabhängig von der Richtung der Datenübertragung kann der Verbindungsaufbau mit dem Broker 20 sowohl vom jeweiligen Publisher, als auch vom jeweiligen Subscriber jeweils gemäß einem definierten Zeitschema und/oder Anlassbezogen erfolgen, wobei für jeden Publisher/Subscriber entsprechende Rollen definiert sein können.

Am Zielpunkt im Backend-Rechnersystem 5 werden die relevanten Daten aus dem Datenhüllpaket extrahiert, der Key-Wrapping-Schlüssel wird unter Verwendung des One-Pass-Schlüsselaustausch-Schemas errechnet und der geheime Schlüssel wird unter Verwendung des Key-Wrapping-Schlüssels entschlüsselt. Dann werden die Integrität und die Authentizität der Daten verifiziert und die Daten selbst entschlüsselt. Das Backend-Rechnersystem 5 kann auf diese Weise entweder die unverschlüsselten Gerätedaten erzeugen, oder die Gerätedaten in der von Hardwarekomponente 2 verschlüsselten Form.

In der umgekehrten Richtung kann die Kommunikation von Daten von dem Backend-Rechnersystem 5 zu der Hardwarekomponente 2 in einer beispielhaften Ausführungsform gemäß der im Folgenden beschriebenen Schritten ausgeführt werden. Auch bei dieser Datenübermittlung werden zwei Varianten beschrieben, die hierin als Variante C und Variante C` bezeichnet werden. Bei Variante C erstreckt sich die Verschlüsselung von dem Backend-Rechnersystem 5 zu dem gerätenahen Gateway 7 und bei Variante C' erstreckt sich die gesicherte Verbindung von dem Backend-Rechnersystem 5 zu dem netzwerknahen Gateway 8. Zusätzlich können die gemäß dem erfindungsgemäßen Verfahren übermittelten Daten für die Hardwarekomponente 2 gemäß einem eigenen kryptographischen System verschlüsselt sein (wobei solche eine Verschlüsselung entweder vom Backend-Rechensystem 5 oder von einem berechtigten Datensender erstellt wird). Eine solche zusätzliche Verschlüsselung ist in Fig. 2 als Variante D eingezeichnet.

Die betreffende Einheit im Backend-Rechensystem, beispielsweise das Software-Repository 15 oder das Firmware-Repository 16, in der die Daten für die Übermittlung abgelegt sind, verwendet den privaten Schlüssel in dem entsprechenden Hardware-Sicherheitsmodul 11, um eine digitale Signatur für die zu übermittelnden Daten zu erstellen, die zu der Hardwarekomponente 2 übermittelt werden sollen. Die Daten können beispielsweise eine Anwendungssoftware, eine Firmware oder Parameterdaten für die Hardwarekomponente 2 umfassen. Gegebenenfalls können dieses Daten bereits verschlüsselt in dem Backend-Rechnersystem 5 hinterlegt worden sein, wobei die Verschlüsselung beispielsweise von einem Hersteller der Hardwarekomponente vorgenommen worden sein kann, der aber nicht der Besitzer und Verwalter des Backend-Rechnersystems ist. In dem Fall kann das Backend-Rechnersystem 5 in Verbindung mit dem Kommunikationsmodul 1 lediglich eine stark gesicherte Übertragungsfunktionalität für Dritte anbieten, bei der die ohnehin vorgesehene Verschlüsselung durch eine weitere, hochsichere Verschlüsselung "überlagert" wird.

Die Daten, einschließlich der digitalen Signatur(en), werden im Backend-Rechnersystem 5 verschlüsselt, vorzugsweise noch bevor sie die betreffende Einheit verlassen. Unter Verwendung des Hardware-Sicherheitsmoduls 11 wird ein geheimer Einmal-Schlüssel erstellt und es wird eine authentifizierte Verschlüsselungsfunktion verwendet, um die zu signierten Daten mit dem Einmal-Schlüssel zu verschlüsseln. Dann wird in dem Hardware-Sicherheitsmodul 11 ein Parametersatz für einen One-Pass-Schlüsselaustausch erstellt, wobei diese Parameter entweder den öffentlichen Schlüssel des gerätenahen Gateways 7 (Variante C) oder den öffentlichen Schlüssel des netzwerknahen Gateways 8 (Variante C') umfassen. Der Einmal-Schlüssel wird unter Verwendung eines Key-Wrapping-Schemas verschlüsselt und es wird ein Datenhüllpaket ("Data-Envelope") erzeugt, das alle diese Daten enthält. Die obigen Schritte können alternativ nicht von dem Hardware-Sicherheitsmodul 11 des Backend-Rechnersystems 5 vorgenommen werden, sondern beispielsweise auch von einem berechtigten Datensender. Auch kann anstelle des Hardware-Sicherheitsmoduls 11 auch eine softwaretechnische Lösung verwendet werden, etwa in Form eines Soft-HSMs oder eines ähnlichen Systems.

Das Backend-Rechnersystem 5 agiert als Publisher und baut eine gemäß einem Netzwerk-Verschlüsselungsprotokoll gesicherte Verbindung mit dem Broker 20 auf, wobei sowohl eine Client-Authentifizierung, als auch eine Server-Authentifizierung erfolgt. Dann überträgt das Backend-Rechnersystem 5 als Publisher das Datenhüllpaket an einen Kanal des Brokers (Schritt 201).

Auch das netzwerknahe Gateway 8 baut eine gemäß einem Netzwerk-Verschlüsselungsprotokoll gesicherte Verbindung mit dem Broker 20 auf, agiert als Subscriber des Kanals, und empfängt das Datenhüllpaket (Schritt 202), wobei sowohl eine Client-Authentifizierung, als auch eine Server-Authentifizierung erfolgt.

Gemäß Variante C` extrahiert zuvor das netzwerknahe Gateway 8 unter Verwendung des Gateway-Sicherheitsmoduls 10` die relevanten Daten aus dem Datenhüllpaket. Der Key-Wrapping-Schlüssel wird unter Verwendung des One-Pass-Schlüsselaustausch-Schemas errechnet und der geheime Schlüssel wird unter Verwendung des Key-Wrapping-Schlüssels entschlüsselt. Die Integrität und die Authentiziät der Daten werden unter Verwendung eines öffentlichen Schlüssels des Backend-Rechnersystems 5 (der im Gateway-Sicherheitsmodul 10` gespeichert ist) verifiziert und die Daten selbst werden entschlüsselt und über die Punkt-zu-Punkt-Verbindung 9 an das gerätenahe Gateway 7 übermittelt.

Gemäß Variante C wird das Datenhüllpaket von dem netzwerknahen Gateway 8 über die Punkt-zu-Punkt-Verbindung 9 an das gerätenahe Gateway 7 übermittelt (Schritt 203). Das gerätenahe Gateway 7 extrahiert die relevanten Daten aus dem Datenhüllpaket, berechnet den Key-Wrapping-Schlüssel unter Verwendung des One-Pass-Schlüsselaustausch-Schemas und entschlüsselt den geheimen Schlüssel unter Verwendung des Key-Wrapping-Schlüssels. Die Integrität und die Authentizität der Daten werden verifiziert und die Daten werden entschlüsselt. Gegebenenfalls kann die Sicherstellung der Integrität und Authentizität der Daten bereits in das kryptographische System integriert sein oder auch auf eine andere geeignete Weise implementiert werden.

Dann übermittelt (204) das gerätenahe Gateway 7 die Daten an die Hardwarekomponente 2. Falls die Hardwarekomponente 2 über einen Sicherheitscontroller 14 verfügt, kann gegebenenfalls die Integrität und die Authentizität der Daten auch von dem Sicherheitscontroller 14 überprüft werden, beispielsweise unter Verwendung eines öffentlichen Schlüssels des Backend-Rechnersystems 5 bzw. eines öffentlichen Schlüssels der Stelle, an der die Daten erstellt bzw. verschlüsselt wurden. Gegebenenfalls kann der Sicherheitscontroller 14 der Hardwarekomponente 2 auch gemäß Variante D die Entschlüsselung der zusätzlichen Verschlüsselungsebene vornehmen.

Als "öffentlicher Schlüssel des Backend-Rechnersystems" werden im Zusammenhang mit der gegenständlichen Offenbarung alle öffentlichen Schlüssel von Schlüsselpaaren bezeichnet, deren privater Schlüssel einer Komponente des Backend-Rechnersystems 5 zugeordnet bzw. darin gespeichert ist. Insbesondere kann ein solcher öffentlicher Schlüssel des Backend-Rechnersystems 5 beispielsweise dem Software-Repository 15 oder dem Firmware-Repository 16 zugeordnet sein.

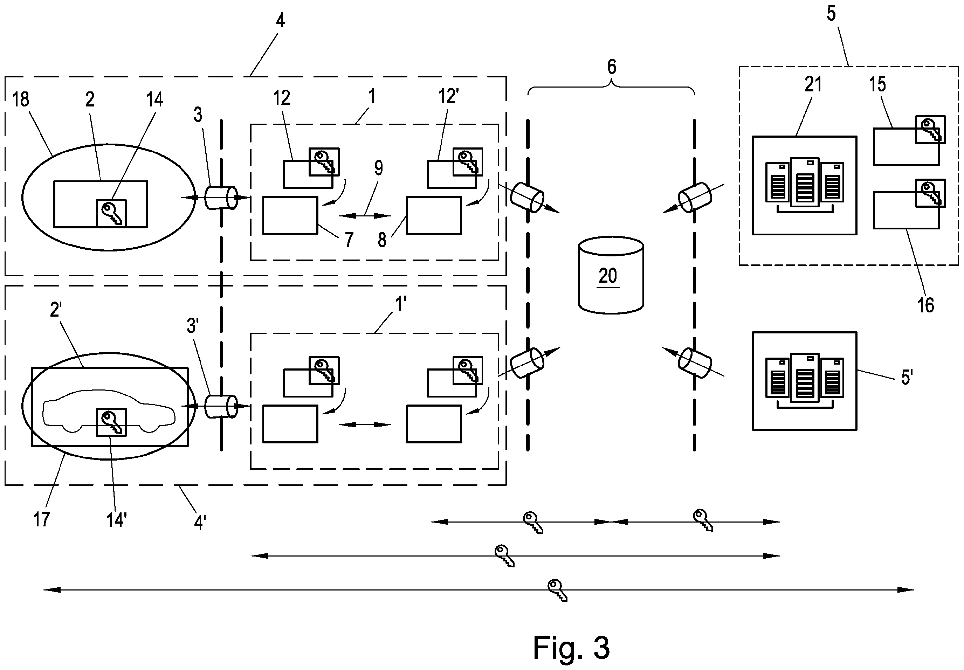

Mithilfe des oben beschriebenen Verfahrens lassen sich sehr komplexe Kommunikationsstrukturen schaffen, über die zahlreiche technische Systeme 4 unterschiedlicher Art mit einem oder mehreren Backend-Rechnersystemen 5 gesichert kommunizieren können. Fig. 3 zeigt beispielsweise eine erweiterte Kommunikationsstruktur mit einem ersten technischen System 4 und einem zweiten technischen System 4`. Das erste technische System 4 kann beispielsweise eine industrielle Einrichtung 18 repräsentieren, beispielsweise einen Prüfstand oder eine Maschinenanordnung, in dem zumindest eine Hardwarekomponente 2, beispielsweise eine Sensoreinheit, vorgesehen ist. Üblicherweise umfasst eine industrielle Einrichtung eine Vielzahl an Hardwarekomponenten 2, die in Verbindung mit den erfindungsgemäßen Lehren verwendet werden können. Das zweite dargestellte technische System 4' kann beispielsweise ein autonomes Fahrzeug 17 repräsentieren, in dem zumindest eine Hardwarekomponente 2 enthalten ist. Üblicherweise enthält ein solches Fahrzeug eine Vielzahl an Hardwarekomponenten 2, für die jeweils die erfindungsgemäßen Lehren genutzt werden können.

In Fig. 3 sind lediglich zwei technische Systeme 4, 4' repräsentativ dargestellt, es ist jedoch klar, dass die Kommunikationsinfrastruktur eine Vielzahl unterschiedlicher und/oder gleichartiger technischer Systeme unterstützen kann.

Zu Beispielen für technische Systeme, die im Zusammenhang mit der gegenständlichen Erfindung vorteilhaft betrieben werden können, zählen Anlagen von Kraftwerksbetreibern, Anlagen von Schiffsschleusenbetreibern, autonome, teilautonome und konventionelle Fahrzeuge und Schiffe, medizinische Untersuchungsanlagen, wie etwa MRT-Geräte und dergleichen, Flugzeuge, Produktionsanlagen, etc.

Zu Beispielen von Hardwarekomponenten, die in solchen technischen Systemen vorgesehen sein können, zählen portable Abgasanlagen (PEMS), Steuergeräte von Fahrzeugen, Haushaltsgeräte, SPS Systeme, allgemein Sensoren und Aktoren, etc.

Jedes technische System umfasst (zumindest) ein Kommunikationsmodul 1, 1`. Jedes Kommunikationsmodul 1, 1' weist im Wesentlichen denselben grundlegenden Aufbau mit einem gerätenahen Gateway 7, einer Punkt-zu-Punkt-Verbindung 9 und einem netzwerknahen Gateway 8 auf, wie er in Verbindung mit Fig. 1 bereits beschrieben wurde.

In der Kommunikationsinfrastruktur können ein oder mehrere Backend-Rechnersysteme 5, 5` vorhanden sein. Beispielsweise kann die Kommunikation mit Hardwarekomponenten 2 über ein Kommunikationsmodul 1 von mehreren Hardwareanbietern genutzt werden, und/oder es können mehrere Backend-Rechnersysteme 5 für unterschiedliche Gruppen an technischen Systemen und/oder Hardwarekomponenten vorgesehen sein. Die Kommunikation über das paketvermittelte Datennetz 6 kann dabei beispielsweise über denselben Broker 20 geführt werden, es können aber auch mehrere Broker für jeweils unterschiedliche Kommunikationswege vorgesehen sein.

Die in Fig. 3 beispielhaft dargestellte Kommunikationsinfrastruktur erlaubt es, für jede unterstützte Hardwarekomponente 2, 2' eine vollständige End-zu-End-Verschlüsselung zwischen einer Komponente eines Backend-Rechensystems 5, 5' und dem Kommunikationsmodul 1 bzw. der Hardwarekomponente 2 herzustellen. Dadurch lassen sich beispielsweise Hackerangriffe, die darauf abzielen, eine Software oder Firmware einer Hardwarekomponente im Zuge der Übertragung über das paketvermittelte Datennetz 6 gegen eine korrumpierte Version auszutauschen, verhindern. Auch zahlreiche Ansätze, die einen hardwarebasierten Angriff (etwa durch eine Seitenkanalattacke) auf das Kommunikationsmodul 1, das interne Netz 3 oder die Hardwarekomponente 2 zum Ziel haben, werden durch die erfindungsgemäßen Vorrichtungen und Verfahren vereitelt.

### Bezugszeichen:

Kommunikationsmodul 1
Hardwarekomponente 2
internes Netz 3
technisches System 4
Backend-Rechnersystem 5
paketvermitteltes Datennetz 6
gerätenahes Gateway 7
netzwerknahes Gateway 8
Punk-zu-Punkt-Verbindung 9
Gateway-Sicherheitsmodul 10
Hardware-Sicherheitsmodul 11
Prozessorchipkarte 12
Kartenschnittstelle 13
Sicherheitscontroller 14
Software-Repository 15
Firmware-Repository 16
Fahrzeug 17
industrielle Einrichtung 18
Gerätespeicher 19
Broker 20
Datencenter 21

## Patentansprüche

1. Kommunikationsmodul (1) zur Datenübertragung zwischen zumindest einer Hardwarekomponente (2), die in ein internes Netz (3) eines technischen Systems (4) eingebunden ist, und einem Backend-Rechnersystem (5), welches an ein paketvermitteltes Datennetz (6) angeschlossen ist, wobei das Kommunikationsmodul (1) ein gerätenahes Gateway (7) und ein netzwerknahes Gateway (8) aufweist, die über eine zwischenstationsfreie Punk-zu-Punkt-Verbindung (9) miteinander verbunden sind, wobei das netzwerknahe Gateway (8) eine Datenübertragungsschnittstelle zwischen dem paketvermittelten Datennetz (6) und der Punkt-zu-Punkt-Verbindung (9) bereitstellt, wobei das gerätenahe Gateway (7) eine Datenübertragungsschnittstelle zwischen der Punkt-zu-Punkt-Verbindung (9) und dem internen Netz (3) bereitstellt, **dadurch gekennzeichnet, dass** eine Kommunikation über die Punkt-zu-Punkt-Verbindung (9) gemäß einem nicht-routingfähigen Protokoll ausgeführt wird.

2. Kommunikationsmodul (1) nach Anspruch 1, **dadurch gekennzeichnet, dass** das gerätenahe Gateway (7) ein Gateway-Sicherheitsmodul (10) aufweist und/oder dass das netzwerknahe Gateway (8) ein Gateway-Sicherheitsmodul (10`) aufweist, wobei das zumindest eine Gateway-Sicherheitsmodul (10, 10') vorzugsweise eine Kartenschnittstelle (13) für eine Prozessorchipkarte (12) aufweist.

3. Technisches System (4) mit einem Kommunikationsmodul (1) nach einem der Ansprüche 1 bis 2, wobei das technische System (4) weiters zumindest eine Hardwarekomponente (2) und zumindest ein internes Netz (3) umfasst, wobei die zumindest eine Hardwarekomponente (2) vorzugsweise einen Sicherheitscontroller (14) mit einem integrierten Kryptoprozessor, einen nichtflüchtigen Speicher und einen flüchtigen Speicher aufweist.

4. Technisches System (4) nach Anspruch 3, **dadurch gekennzeichnet, dass** das technische System ein Fahrzeug (17) gemäß einer der Autonomiestufen 1 bis 5 ist oder eine von einem Automatisierungssystem gesteuerte Maschinenanordnung (18), insbesondere ein Prüfstand ist.

5. Verfahren zur Übertragung von Gerätedaten einer Hardwarekomponente (2), die in ein internes Netz (3) eines technischen Systems (4) gemäß einem der Ansprüche 3 bis 4 eingebunden ist, zu einem Backend-Rechnersystem (5), welches an ein paketvermitteltes Datennetz (6) angeschlossen ist, wobei das Verfahren durch die folgenden Schritte gekennzeichnet ist:
- Übermitteln (100) der Gerätedaten von der Hardwarekomponente (2) über das interne Netz (3) zu dem gerätenahen Gateway (7),
- Übermitteln (101) der Gerätedaten von dem gerätenahen Gateway (7) über die Punkt-zu-Punkt-Verbindung (9) zu dem netzwerknahen Gateway (8),
wobei von dem gerätenahen Gateway (7) oder dem netzwerknahen Gateway (8) die Gerätedaten in eine verschlüsselte Instanz der Gerätedaten umgewandelt wird, und
- Übermitteln (102,103) der verschlüsselten Instanz der Gerätedaten von dem netzwerknahen Gateway (8) über das paketvermittelte Datennetz (6) zu dem Backend-Rechnersystem (5),
**dadurch gekennzeichnet, dass** die Kommunikation über die Punkt-zu-Punkt-Verbindung (9) gemäß einem nicht-routingfähigen Protokoll ausgeführt wird,

6. Verfahren nach Anspruch 5, **dadurch gekennzeichnet, dass** das Verfahren die folgenden Schritte aufweist:
- Erstellen einer verschlüsselten Instanz der Gerätedaten unter Verwendung eines öffentlichen Schlüssels eines Empfängers der Daten, insbesondere des Backend-Rechnersystems (5), durch
∘ das gerätenahe Gateway (7), vorzugweise unter Verwendung des Gateway-Sicherheitsmoduls (10) des gerätenahen Gateways (7), oder
∘ durch das netzwerknahe Gateway (8), vorzugweise unter Verwendung des Gateway-Sicherheitsmoduls (10`) des netzwerknahen Gateways (7).

7. Verfahren nach Anspruch 5 oder 6, **dadurch gekennzeichnet, dass** der Schritt des Übermittelns (102, 103) der verschlüsselten Instanz über das paketvermittelte Datennetz (6) das Übermitteln (102) der verschlüsselten Instanz zu einem Broker (20) umfasst, und gemäß einem Protokoll erfolgt, welches rein über Push-Mechanismen funktioniert.

8. Verfahren nach einem der Ansprüche 5 bis 7, **dadurch gekennzeichnet, dass** das netzwerknahe Gateway (8) die verschlüsselte Instanz der Gerätedaten vor der Übermittlung über das paketvermittelte Datennetz (6) gemäß einem Netzwerk-Verschlüsselungsprotokoll verschlüsselt.

9. Verfahren nach einem der Ansprüche 5 bis 8, **dadurch gekennzeichnet, dass** die verschlüsselte Instanz der Gerätedaten Prüfdaten beinhaltet, welche dem Backend-Rechensystem (5) und/oder einem anderen berechtigten Datenempfänger eine Prüfung der Integrität und/oder Authentizität der Gerätedaten erlauben.

10. Verfahren zum Speichern von Aktualisierungsdaten in einem Gerätespeicher (19) einer Hardwarekomponente (2), die in ein internes Netz (3) eines technischen Systems (4) gemäß einem der Ansprüche 3 bis 4 eingebunden ist, wobei die Aktualisierungsdaten für die Hardwarekomponente (2) von einem Backend-Rechnersystem (5) bereitgestellt werden und wobei das Verfahren durch die folgenden Schritte gekennzeichnet ist:
- Empfangen (202) einer verschlüsselten Instanz der Aktualisierungsdaten durch das netzwerknahe Gateway (8) über das paketvermittelte Datennetz (6) von dem Backend-Rechnersystem (5),
- Übermitteln (203) der Aktualisierungsdaten von dem netzwerknahen Gateway (8) über die Punkt-zu-Punkt-Verbindung (9) zu dem gerätenahen Gateway (7),
- Übermitteln der Aktualisierungsdaten an die Hardwarekomponente (2) über das interne Netz (3),
wobei verschlüsselten Instanz der Aktualisierungsdaten von dem gerätenahen Gateway (7) oder dem netzwerknahen Gateway (8) entschlüsselt wird und
- Speichern der Aktualisierungsdaten in dem Gerätespeicher (19) der Hardwarekomponente,
**dadurch gekennzeichnet, dass** die Kommunikation über die Punkt-zu-Punkt-Verbindung (9) gemäß einem nicht-routingfähigen Protokoll ausgeführt wird,

11. Verfahren nach Anspruch 10, **dadurch gekennzeichnet, dass** die verschlüsselte Instanz der Aktualisierungsdaten von dem Backend-Rechnersystem (5) und/oder einem berechtigten Datensender unter Verwendung eines öffentlichen Schlüssels der Hardwarekomponente (2), und/oder des gerätenahen Gateways (7) und/oder des netzwerknahen Gateways (8) erstellt wird.

12. Verfahren nach Anspruch 10 oder 11, **dadurch gekennzeichnet, dass** das Verfahren die folgenden Schritte aufweist:
- Entschlüsseln der verschlüsselten Instanz der Aktualisierungsdaten
∘ durch das netzwerknahe Gateway (8), vorzugsweise unter Verwendung des Gateway-Sicherheitsmoduls (10`) des netzwerknahen Gateways (8) oder
∘ durch das gerätenahe Gateway (7), vorzugsweise unter Verwendung des Gateway-Sicherheitsmoduls (10) des gerätenahen Gateways (7).

13. Verfahren nach einem der Ansprüche 10 bis 12, **dadurch gekennzeichnet, dass** die Aktualisierungsdaten eine Firmware, eine Anwendungssoftware und/oder Parameterdaten der Hardwarekomponente (2) umfassen.

14. Verfahren nach einem der Ansprüche 10 bis 13, **dadurch gekennzeichnet, dass** der Schritt des Empfangens (202) das Abrufen der verschlüsselten Instanz der Aktualisierungsdaten von einem Broker (20) umfasst und gemäß einem Protokoll erfolgt, welches rein über Push-Mechanismen funktioniert.

15. Verfahren nach einem der Ansprüche 10 bis 14, **dadurch gekennzeichnet, dass** die verschlüsselte Instanz der Aktualisierungsdaten Prüfdaten beinhaltet, welche dem Gateway-Sicherheitsmodul (10) des gerätenahen Gateways (7) und/oder dem Gateway-Sicherheitsmodul (10') des netzwerknahen Gateways (8) und/oder dem Sicherheitscontroller (14) der Hardwarekomponente (2) eine Prüfung der Integrität und/oder Authentizität der Aktualisierungsdaten erlauben.

## Claims

1. A communication module (1) for data transmission between at least one hardware component (2) which is integrated into an internal network (3) of a technical system (4), and a back-end computer system (5), which is connected to a packet-switched data network (6), wherein the communication module (1) has a device-proximal gateway (7) and a network-proximal gateway (8), which are connected to one another via a point-to-point connection (9) without intermediate stations, wherein the network-proximal gateway (8) provides a data transmission interface between the packet-switched data network (6) and the point-to-point connection (9), wherein the device-proximal gateway (7) provides a data transmission interface between the point-to-point connection (9) and the internal network (3), **characterized in that** a communication via the point-to-point connection (9) is carried out according to a non-routable protocol.

2. The communication module (1) according to claim 1, **characterized in that** the device-proximal gateway (7) has a gateway security module (10) and/or that the network-proximal gateway (8) has a gateway security module (10'), wherein at least one gateway security module (10) preferably has a card interface (13) for a processor chip card (12).

3. A technical system (4) with a communication module (1) according to any of claims 1 to 2, wherein the technical system (4) further comprises at least one hardware component (2) and at least one internal network (3), wherein the at least one hardware component (2) preferably has a security controller (14) with an integrated cryptoprocessor, a non-volatile memory and a volatile memory.

4. The technical system (4) according to claim 3, **characterized in that** the technical system is a vehicle (17) according to one of the autonomy levels 1 to 5 or the technical system (4) is a machine arrangement (18) controlled by an automation system, in particular a test bench.

5. A method for the transmission of device data of a hardware component (2), which is integrated in an internal network (3) of a technical system (4) according to any of claims 4 to 4, to a back-end computer system (5), which is connected to a packet-switched data network (6), the method being **characterized by** the following steps:
- transmitting (100) the device data from the hardware component (2) via the internal network (3) to the device-proximal gateway (7),
- transmitting (101) the device data from the device-proximal gateway (7) via the point-to-point connection (9) to the network-proximal gateway (8),
wherein the device data are converted into an encrypted instance of the device data by the device-proximal gateway (7) or the network-proximal gateway (8), and
- transmitting (102, 103) the encrypted instance of the device data from the network-proximal gateway (8) via the packet-switched data network (6) to the back-end computer system (5).
**characterized in that** the communication via the point-to-point connection (9) is carried out according to a non-routable protocol.

6. The method according to claim 5, **characterized in that** the method comprises the following steps:
- creating an encrypted instance of the device data using a public key of a receiver of the data, in particular the back-end computer system (5), by
∘ the device-proximal gateway (7), preferably using the gateway security module (10) of the device-proximal gateway (7), or
∘ by the network-proximal gateway (8), preferably using the gateway security module (10`) of the network-proximal gateway (7).

7. The method according to claim 5 or 6, **characterized in that** the step of transmitting (102, 103) the encrypted instance via the packet-switched data network (6) includes transmitting (102) the encrypted instance to a broker (20), and takes place in accordance with a protocol that functions purely via push mechanisms.

8. The method according to any of claims 5 to 7, **characterized in that** the network-proximal gateway (8) encrypts the encrypted instance of the device data before it is transmitted over the packet-switched data network (6) in accordance with a network encryption protocol.

9. The method according to any of claims 5 to 8, **characterized in that** the encrypted instance of the device data contains check data which allow the back-end computing system (5) and/or another authorized data receiver to check the integrity and/or authenticity of the device data.

10. A method for storing update data in a device memory (19) of a hardware component (2) which is integrated in an internal network (3) of a technical system (4) according to any of claims 3 to 4, wherein the update data for the hardware component (2) are provided by a back-end computer system (5) and wherein the method is **characterized by** the following steps:
- receiving (202) an encrypted instance of the update data by the network-proximal gateway (8) via the packet-switched data network (6) from the back-end computer system (5),
- transmitting (203) the update data from the network-proximal gateway (8) via the point-to-point connection (9) to the device-proximal gateway (7),
- transmitting the update data to the hardware component (2) via the internal network (3),
wherein the encrypted instance of the update data is decrypted by the device-proximal gateway (7) or the network-proximal gateway (8), and
- storing the update data in the device memory (19) of the hardware component
**characterized in that** the communication via the point-to-point connection (9) is carried out according to a non-routable protocol.

11. The method according to claim 10, **characterized in that** the encrypted instance of the update data is created by the back-end computer system (5) and/or an authorized data transmitter using a public key of the hardware component (2) and/or the device-proximal gateway (7) and/or the network-proximal gateway (8).

12. The method according to claim 10 or 11, **characterized in that** the method comprises the following steps:
- decrypting the encrypted instance of the update data
∘ by the network-proximal gateway (8), preferably using the gateway security module (10`) of the network-proximal gateway (8) or
∘ by the device-proximal gateway (7), preferably using the gateway security module (10) of the device-proximal gateway (7).

13. The method according to any of claims 10 to 12, **characterized in that** the update data comprise firmware, application software and/or parameter data of the hardware component (2).

14. The method according to any of claims 10 to 13, **characterized in that** the step of receiving (202) includes the retrieval of the encrypted instance of the update data from a broker (20) and can take place in accordance with a protocol which functions purely via push mechanisms.

15. The method according to any of claims 10 to 14, **characterized in that** the encrypted instance of the update data contains check data which allow the gateway security module (10) of the device-proximal gateway (7), and/or the gateway security module (10`) of the network-proximal gateway (8) and/or the security controller (14) of the hardware component (2), to check the integrity and/or authenticity of the update data.

## Revendications

1. Module de communication (1) pour la transmission de données entre au moins un composant matériel (2) intégré dans un réseau interne (3) d'un système technique (4) et un système informatique dorsal (5) connecté à un réseau de données (6) à commutation par paquets, le module de communication (1) présentant une passerelle à proximité de l'appareil (7) et une passerelle à proximité du réseau (8) reliées l'une à l'autre par l'intermédiaire d'une connexion point à point (9) sans station intermédiaire, dans lequel la passerelle à proximité du réseau (8) fournit une interface de transmission de données entre le réseau de données (6) à commutation par paquets et la connexion point à point (9), dans lequel la passerelle à proximité de l'appareil (7) fournit une interface de transmission de données entre la connexion point à point (9) et le réseau interne (3), **caractérisé en ce qu'**une communication est exécutée par l'intermédiaire de la connexion point à point (9) selon un protocole non routable.

2. Module de communication (1) selon la revendication 1,
**caractérisé en ce que** la passerelle à proximité de l'appareil (7) présente un module de sécurité de passerelle (10) et/ou **en ce que** la passerelle à proximité du réseau (8) présente un module de sécurité de passerelle (10'), dans lequel l'au moins un module de sécurité de passerelle (10, 10') présente de préférence une interface de carte (13) pour une carte à puce de processeur (12).

3. Système technique (4) comportant un module de communication (1) selon l'une des revendications 1 à 2, le système technique (4) comprenant en outre au moins un composant matériel (2) et au moins un réseau interne (3), dans lequel l'au moins un composant matériel (2) présente de préférence un contrôleur de sécurité (14), comportant un cryptoprocesseur intégré, une mémoire non volatile et une mémoire volatile.

4. Système technique (4) selon la revendication 3, **caractérisé en ce que** le système technique est un véhicule (17) conformément à l'un des niveaux d'autonomie 1 à 5 ou est un ensemble machine (18) commandé par un système d'automatisation, notamment un banc d'essai.

5. Procédé de transmission de données d'appareil d'un composant matériel (2), qui est intégré dans un réseau interne (3) d'un système technique (4) selon l'une des revendications 3 à 4, à un système informatique dorsal (5) connecté à un réseau de données (6) à commutation par paquets, le procédé étant **caractérisé par** les étapes suivantes :
- transmission (100) des données d'appareil du composant matériel (2) à la passerelle à proximité de l'appareil (7) par l'intermédiaire du réseau interne (3),
- transmission (101) des données d'appareil de la passerelle à proximité de l'appareil (7) à la passerelle à proximité du réseau (8) par l'intermédiaire de la connexion point à point (9),
dans lequel la passerelle à proximité de l'appareil (7) ou la passerelle à proximité du réseau (8) convertit les données d'appareil en une instance chiffrée des données d'appareil, et
- transmission (102,103) de l'instance chiffrée des données d'appareil de la passerelle à proximité du réseau (8) au système informatique dorsal (5) par l'intermédiaire du réseau de données (6) à commutation par paquets,
**caractérisé en ce que** la communication est exécutée par l'intermédiaire de la connexion point à point (9) selon un protocole non routable.

6. Procédé selon la revendication 5, **caractérisé en ce que** le procédé présente les étapes suivantes :
- création d'une instance chiffrée des données d'appareil à l'aide d'une clé publique d'un destinataire des données, notamment du système informatique dorsal (5), au moyen de
∘ la passerelle à proximité de l'appareil (7), de préférence à l'aide du module de sécurité de passerelle (10) de la passerelle à proximité de l'appareil (7), ou
∘ au moyen de la passerelle à proximité du réseau (8), de préférence à l'aide du module de sécurité de passerelle (10') de la passerelle à proximité du réseau (7).

7. Procédé selon la revendication 5 ou 6, **caractérisé en ce que** l'étape de transmission (102, 103) de l'instance chiffrée par l'intermédiaire du réseau de données (6) à commutation par paquets comprend la transmission (102) de l'instance chiffrée à un courtier (20), et est réalisée selon un protocole qui fonctionne uniquement par le biais de mécanismes de poussée.

8. Procédé selon l'une des revendications 5 à 7, **caractérisé en ce que** la passerelle à proximité du réseau (8) chiffre l'instance chiffrée des données d'appareil avant la transmission par l'intermédiaire du réseau de données (6) à commutation par paquets selon un protocole de chiffrement de réseau.

9. Procédé selon l'une des revendications 5 à 8, **caractérisé en ce que** l'instance chiffrée des données d'appareil contient des données de vérification, qui permettent au système informatique dorsal (5) et/ou à un autre destinataire de données autorisé d'effectuer une vérification de l'intégrité et/ou de l'authenticité des données d'appareil.

10. Procédé de stockage de données de mise à jour dans une mémoire d'appareil (19) d'un composant matériel (2) qui est intégré dans un réseau interne (3) d'un système technique (4) selon l'une des revendications 3 à 4, dans lequel les données de mise à jour relatives au composant matériel (2) sont fournies par un système informatique dorsal (5), le procédé étant **caractérisé par** les étapes suivantes :
- réception (202) d'une instance chiffrée des données de mise à jour par la passerelle à proximité du réseau (8) par l'intermédiaire du réseau de données (6) à commutation par paquets depuis le système informatique dorsal (5),
- transmission (203) des données de mise à jour de la passerelle à proximité du réseau (8) à la passerelle à proximité de l'appareil (7) par l'intermédiaire de la connexion point à point (9),
- transmission des données de mise à jour au composant matériel (2) par l'intermédiaire du réseau interne (3),
dans lequel l'instance chiffrée des données de mise à jour est déchiffrée par la passerelle à proximité de l'appareil (7) ou la passerelle à proximité du réseau (8) et
- stockage des données de mise à jour dans la mémoire d'appareil (19) du composant matériel,
**caractérisé en ce que** la communication est exécutée par l'intermédiaire de la connexion point à point (9) selon un protocole non routable.

11. Procédé selon la revendication 10, **caractérisé en ce que** l'instance chiffrée des données de mise à jour est créée par le système informatique dorsal (5) et/ou un émetteur de données autorisé à l'aide d'une clé publique du composant matériel (2), et/ou de la passerelle à proximité de l'appareil (7) et/ou de la passerelle à proximité du réseau (8).

12. Procédé selon la revendication 10 ou 11, **caractérisé en ce que** le procédé présente les étapes suivantes :
- déchiffrement de l'instance chiffrée des données de mise à jour
∘ au moyen de la passerelle à proximité du réseau (8), de préférence à l'aide du module de sécurité de passerelle (10') de la passerelle à proximité du réseau (8) ou
∘ au moyen de la passerelle à proximité de l'appareil (7), de préférence à l'aide du module de sécurité de passerelle (10) de la passerelle à proximité de l'appareil (7).

13. Procédé selon l'une des revendications 10 à 12, **caractérisé en ce que** les données de mise à jour comprennent un micrologiciel, un logiciel d'application et/ou des données de paramètre du composant matériel (2).

14. Procédé selon l'une des revendications 10 à 13, **caractérisé en ce que** l'étape de réception (202) comprend la récupération de l'instance chiffrée des données de mise à jour par un courtier (20) et est réalisée selon un protocole qui fonctionne uniquement par le biais de mécanismes de poussée.

15. Procédé selon l'une des revendications 10 à 14, **caractérisé en ce que** l'instance chiffrée des données de mise à jour contient des données de vérification qui permettent au module de sécurité de passerelle (10) de la passerelle à proximité de l'appareil (7) et/ou au module de sécurité de passerelle (10') de la passerelle à proximité du réseau (8) et/ou au contrôleur de sécurité (14) du composant matériel (2) d'effectuer une vérification de l'intégrité et/ou de l'authenticité des données de mise à jour.
